Europäisches Patentamt

European Patent Office

Office européen des brevets

(19)

(11) Numéro de publication : **0 145 585**
**B1**

# (12) FASCICULE DE BREVET EUROPÉEN

(45) Date de publication du fascicule du brevet :
**24.01.90**

(21) Numéro de dépôt : **84402459.6**

(22) Date de dépôt : **30.11.84**

(51) Int. Cl.⁵ : **B 05 C   3/02**, B 05 C   3/09,
B 05 C  11/11

(54) **Dispositif de formation et de depot sur un substrat de couches monomoleculaires.**

(30) Priorité : **09.12.83 FR 8319770**

(43) Date de publication de la demande :
**19.06.85 Bulletin 85/25**

(45) Mention de la délivrance du brevet :
**24.01.90 Bulletin 90/04**

(84) Etats contractants désignés :
**DE GB NL**

(56) Documents cités :
**WO-A-83 /031 65**
**FR-A- 2 341 199**
**GB-A- 1 582 860**
**REVIEW OF SCIENTIFIC INSTRUMENTS, vol. 46, no. 10, octobre 1975, pages 1380-1385, American Institute of Physics, New York, US; P. FROMHERZ: "Instrumentation for handling monomolecular films at an air-water interface"**

(73) Titulaire : **COMMISSARIAT A L'ENERGIE ATOMIQUE
31/33, rue de la Fédération
F-75015 Paris (FR)**

(72) Inventeur : **Barraud, André
4, rue des Closeaux
F-91440 Bures-Sur-Yvette (FR)**
Inventeur : **Leloup, Jean
4, rue du Clos
F-91190 Gif sur Yvette (FR)**

(74) Mandataire : **Mongrédien, André et al
c/o BREVATOME 25, rue de Ponthieu
F-75008 Paris (FR)**

EP 0 145 585 B1

**Description**

Les couches monomoléculaires de composés organiques trouvent de nombreuses applications, spécialement en électronique où elles sont utilisées par exemple pour réaliser des structures métal-isolant-métal dans lesquelles l'épaisseur de la couche de diélectrique est particulièrement bien contrôlée.

Une méthode connue pour fabriquer et déposer des couches monomoléculaires de molécules amphiphiles a été décrite par Langmuir. Selon cette méthode, on introduit sur la surface du liquide une solution de molécules amphiphiles dissoute dans un solvant non miscible avec le liquide de la cuve. Le solvant est par exemple du chloroforme ou de l'éther de pétrole. Le solvant s'évapore, laissant les molécules partiellement immergées dans l'eau avec leur grand axe orienté au hasard. Les molécules sont redressées par compression au moyen d'une barrière à une pression superficielle déterminée. Le film ainsi formé peut être déposé sur un substrat hydrophilique ou hydrophobique. Des substrats hydrophiliques sont par exemple des oxydes tels que $Al_2O_3$, $CaF_2$ et $SiO_2$. Des substrats hydrophobiques sont les métaux purs tels que l'or, l'argent ou le germanium. On dépose la couche monomoléculaire à la surface du substrat préalablement immergé dans le liquide de la cuve par remontée lente de celui-là tout en maintenant la couche à cette pression superficielle déterminée pendant la durée du dépôt. Pour réaliser la compression de la couche monomoléculaire, on utilise une barrière étanche et mobile sur la surface du liquide de la cuve. Par déplacement de cette barrière, on diminue l'aire de la couche monomoléculaire préalablement formée à la surface du liquide de manière à l'amener à la pression superficielle voulue.

Pendant toutes les opérations de fabrication et de dépôt du film, une propreté absolue est requise, ainsi qu'une absence de pollution du bain et de sa surface par des produits ioniques complexants ou surfactants.

On connaît dans l'art antérieur un grand nombre de cuves permettant la formation et le dépôt de couches monomoléculaires selon la méthode de Langmuir. Par exemple, la Société Joyce-Loebel (Team Valleys Gateshead, G. B.) commercialise une cuve en verre avec barrière en ruban de téflon à périmètre constant. Une telle cuve est également décrite dans le document de brevet PCT-WO-83 03165. D'autre part, le document GB-A-1 582 860 décrit un procédé pour la préparation d'un substrat comportant un circuit imprimé dans lequel l'une des étapes est le dépôt d'une couche de Langmuir sur un substrat. La cuve qui y est décrite brièvement se compose d'une cuve de verre rectangulaire contenant une sous-phase. Les molécules sont dispersées à la surface de l'eau de manière à remplir le domaine situé entre les deux plaques de verre longitudinales et la barrière qui est déplacée par gravité. La tension superficielle exercée sur les molécules est mesurée au moyen d'une balance de Wilhemy. La Société Lauda (R. F. A.) commercialise une cuve en tôle recouverte de téflon de petite taille à balance de Langmuir. Enfin, dans Rev. Sci. Instrum., vol. 46, n° 10, Oct. 75, Peter Fromherz décrit une cuve circulaire de petites dimensions.

Toutefois, ces divers dispositifs nécessitent un haut degré de métier pour être utilisés et présentent de sérieux problèmes de nettoyage ou de pollution.

En effet, dans le cas de la cuve commercialisée par la Société Lauda, la barrière mobile est constituée par une simple règle posée sur le rebord de la cuve. En conséquence, cette dernière doit contenir une quantité très précise de liquide. Si la quantité est excessive, la cuve déborde. Si la quantité est insuffisante, le ménisque ne se forme pas.

Dans le cas de la cuve commercialisée par la Société Joyce-Lobel, la barrière mobile est constituée par un ruban à périmètre constant. Ce système présente deux inconvénients : d'abord le mécanisme présente des poulies tournantes qui traversent la surface dans le compartiment du film, ce qui cisaille le film monomoléculaire fragile et le dépose sur les poulies et le ruban ; ensuite il existe dans ce dispositif des zones inaccessibles au nettoyage de surface, entre autres la zone de la cuve extérieure au ruban, où le film formé par les impuretés issues de l'eau ne peut être comprimé pour être rassemblé et aspiré.

La présente invention a pour objet une cuve qui remédie à ces inconvénients.

De manière plus précise, l'invention concerne une cuve de dépôt d'un film monomoléculaire comprenant une cuve comportant des parois à rebord horizontal et un fond, la cuve contenant un liquide, une barrière délimitant deux zones à la surface du liquide, des moyens pour déplacer la barrière à la surface du liquide selon une direction perpendiculaire à la barrière, un solvant introduit sur la surface du liquide et contenant des molécules dissoutes, au moins un substrat, des moyens pour déplacer le substrat selon une direction verticale, des moyens pour mesurer la tension à la surface du liquide, caractérisée en ce que le niveau du liquide est inférieur au rebord horizontal de la cuve, la barrière présentant un décrochement à chacune de ses extrémités et reposant sur les bords de la cuve par ce décrochement, ledit décrochement déterminant également une partie plus étroite partiellement immergée dans le liquide de la cuve, des moyens d'étanchéité étant prévus entre les faces de la partie plus étroite et les parois situées en regard.

Selon une autre caractéristique, les moyens pour déplacer la barrière sont constitués par une première et une seconde poulie situées à une première extrémité de la cuve, par quatre poulies situées à une deuxième extrémité de la cuve, par un moteur entraînant un cabestan et par un câble passant sur chacune desdites poulies et entraîné en rotation par le cabestan, les extrémités de la barrière étant fixées au câble et se déplaçant dans le même sens.

De préférence, la barrière comporte un étrier fixé de manière amovible, le câble étant fixé à l'extrémité de cet étrier.

Grâce à ces dispositions et à d'autres qui apparaîtront à la lecture de la description d'un exemple détaillé de réalisation de l'invention, la cuve est utilisable par un non-spécialiste et permet de résoudre les problèmes causés par les diverses molécules actuellement utilisées pour faire des films de Langmuir.

L'invention sera décrite plus en détail en référence aux figures jointes, sur lesquelles :

la figure 1 est une vue en perspective d'une cuve de l'invention ;

la figure 2 est une vue de détail en perspective d'une barrière d'une cuve réalisée conformément à l'invention ;

les figures 3 et 4 représentent une première et une deuxième variantes de réalisation de la barrière de la figure 2 ;

la figure 5 est une vue en coupe d'une cuve de grandes dimensions qui comporte deux barrières ;

la figure 6 est une vue en perspective de moyens préférentiels pour déplacer le substrat verticalement ;

la figure 7 représente des moyens de nettoyage du liquide de la cuve.

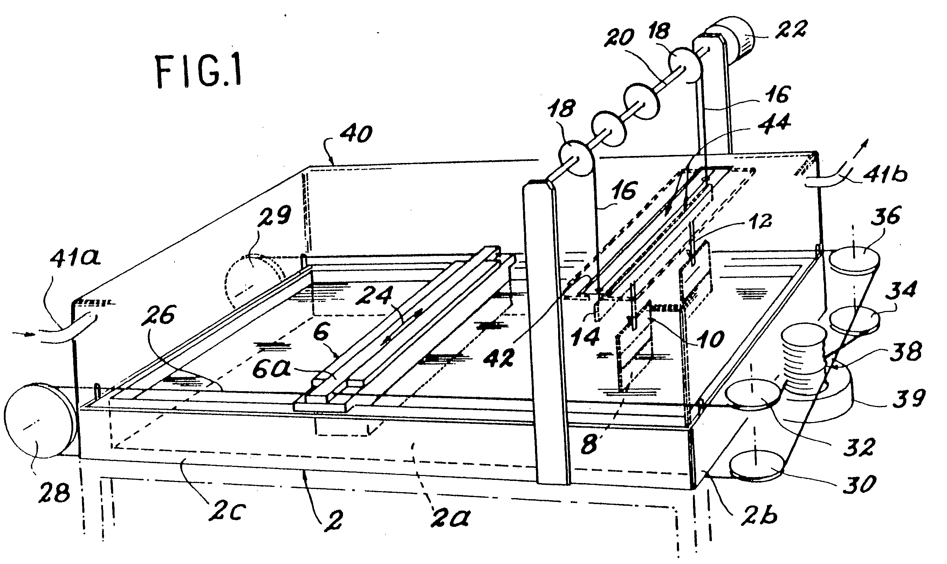

Sur la figure 1, la cuve désignée par la référence générale 2 est de forme rectangulaire. D'autres formes seraient possibles. Par exemple, la cuve pourrait être circulaire. Elle est constituée de deux parois longitudinales 2a parallèles. Ces parois sont verticales mais elles pourraient également être inclinées par rapport à la verticale. La cuve comporte également deux parois latérales 2b disposées aux extrémités des parois 2a et un fond 2c. Le rebord de la cuve est horizontal, tout au moins sur le champ des côtés 2a.

Les côtés 2a, 2b et le fond 2c sont réalisés en polytétrafluoréthylène (PTFE) haute pression. Ce matériau présente une grande inertie chimique et une faible porosité. Il présente l'avantage, par rapport au verre, de ne pas libérer d'ions. Par rapport aux autres matériaux plastiques, il présente l'avantage de ne pas désorber de molécules organiques ; par rapport au PTFE ordinaire celui de ne pas emprisonner de solvant ni d'ions et par rapport au PTFE déposé, celui d'être imperméable aux ions des parois métalliques.

La cuve est constituée par des éléments assemblées. Les parois et le fond peuvent être collés. Elles peuvent être également assemblées par des embrèvements, c'est-à-dire par des mortaises réalisées dans les pièces à assembler et dans lesquelles on insère une clavette. La cuve comporte des renforts mécaniques métalliques, plastiques ou stratifiés. Ces renforts sont constitués par exemple par des cornières disposées le long des côtés longitudinaux et sous le fond de la cuve et vissées. Ceci permet d'en diminuer le prix de revient et de faire des cuves de grande taille malgré l'emploi du PTFE haute pression qui n'est disponible qu'en petits volumes.

De manière classique, la cuve 2 contient un liquide encore appelé « sous-phase ». Ce liquide est par exemple de l'eau. Sur le liquide, on répand une solution de molécules amphiphiles dissoutes dans un solvant. Le solvant s'évapore, laissant les molécules partiellement immergées dans l'eau. Les molécules sont redressées par compression au moyen d'une barrière 6 à pression superficielle déterminée. Un substrat 8 accroché à une pince 10 dans laquelle il est positionné avec précision est déplacé selon une direction verticale. La couche monomoléculaire peut être déposée sur le substrat lors de la descente ou de la remontée du substrat 8. Dans la réalisation représentée sur la figure 1, la pince 10 est fixée à l'extrémité d'une barre verticale 12 elle-même solidaire d'une traverse 14. La traverse 14 est suspendue à ses deux extrémités à deux fils 16 qui s'enroulent sur des roues 18. Ces roues sont montées sur un axe 20 entraîné en rotation au moyen d'un moteur électrique 22. Un tel dispositif de levage des échantillons ne comporte pas de frottement, c'est-à-dire qu'il est capable d'assurer un déplacement continu et sans à-coups du substrat, même à faible vitesse.

Conformément à une caractéristique de l'invention, la barrière 6 est partiellement immergée dans le liquide 4. En effet, dans les dispositifs antérieurement connus, le niveau du liquide affleure les bords de la cuve et la barrière mobile se présente sous la forme d'une simple règle posée sur les bords de la cuve. Il est par conséquent nécessaire de mesurer avec précision la quantité du liquide introduite dans la cuve. D'autre part, il existe des risques de débordement.

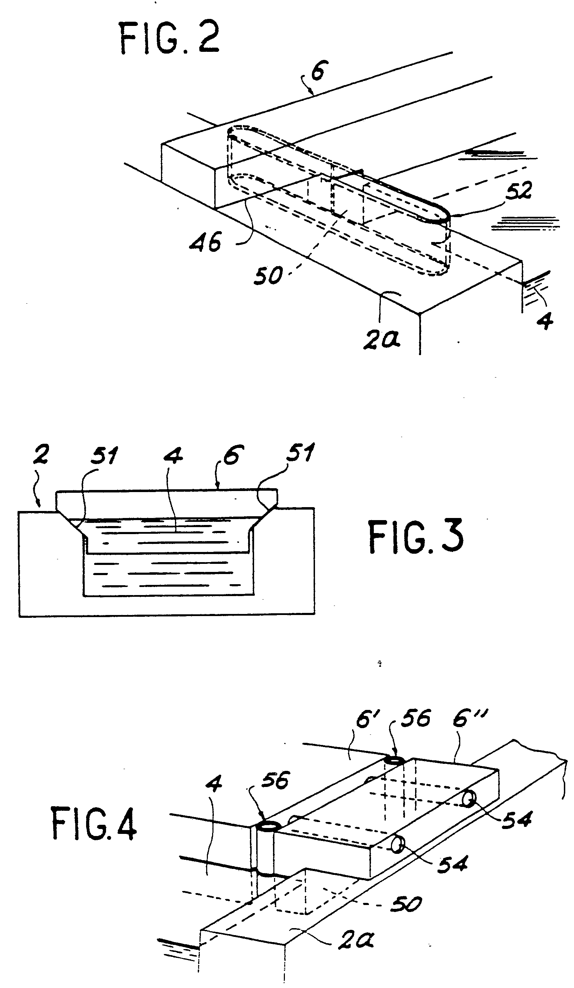

L'invention comporte une barrière d'un type particulier qui remédie à ces inconvénients. La barrière est partiellement immergée dans le liquide 4. Elle repose à ses deux extrémités sur les bords longitudinaux des parois 2a et présente des décrochements qui permettent de l'immerger partiellement dans le liquide, comme on le décrit plus en détail en référence aux figures 2 à 4. La barrière 6 comporte un étrier 6a qui repose simplement dans une rainure longitudinale de la barrière. L'étrier peut se déplacer librement en translation selon la direction longitudinale de la barrière, comme schématisé par la flèche 24. Les extrémités de l'étrier 6a sont fixées à un câble d'entraînement 26. La figure 1 montre le circuit de ce câble. Il comporte deux poulies 28 et 29 libres en rotation et dont l'axe est horizontal. Elles sont situées à une première extrémité de la cuve 2 à gauche sur la figure 1. Par ailleurs deux poulies 32 et 34 libres en rotation à axe vertical ainsi que deux poulies également libres en rotation sont situées à l'autre extrémité de la cuve. Le circuit comporte encore un cabestan 38 sur lequel s'enroule le câble 26 et qui est entraîné par un moteur 39. A partir de la poulie 32, le câble passe sur le cabestan 38 puis sur la poulie 34, puis les poulies 29, 36, 30 et enfin la poulie 28 avant de revenir à la poulie 32. Une extrémité de l'étrier 6a est fixée au brin du câble qui se trouve entre les poulies 29 et 36 tandis que l'autre extrémité est fixée au brin du câble qui se trouve entre les poulies 28 et 32. On constate ainsi que les deux extrémités de l'étrier 6a se déplacent dans la même direction et à la même vitesse. Ce système d'entraînement maintient les faces latérales de la barrière mobile 6 bien parallèles aux parois latérales de la cuve.

L'étrier peut être désaccouplé instantanément de la barrière et réaccouplé facilement par gravité. Ce dispositif d'entraînement permet un échange très aisé de la barrière mobile 6 pour son nettoyage.

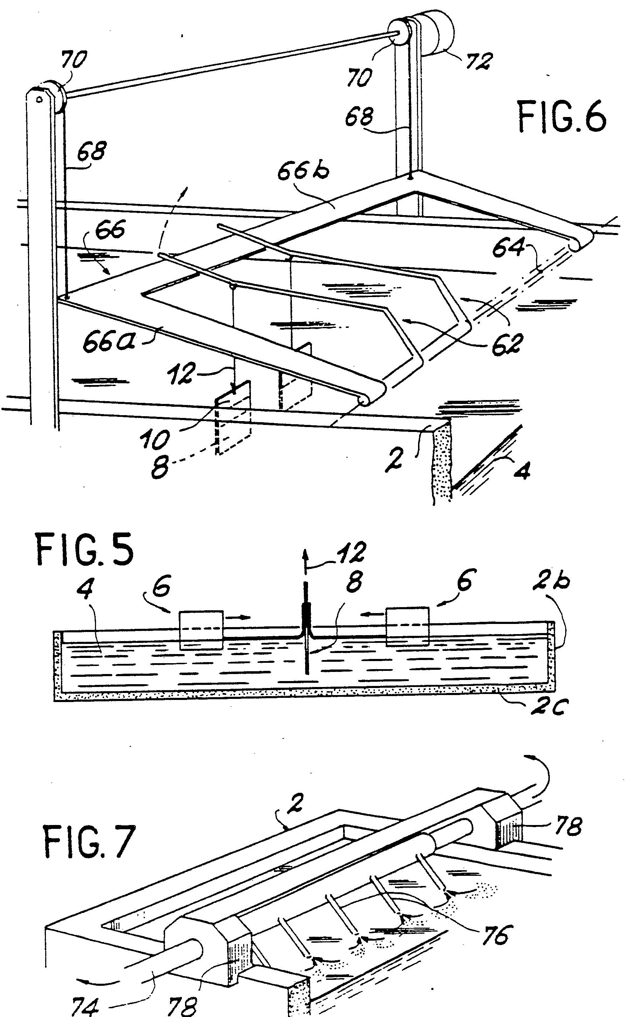

Dans le cas de cuves de très grandes dimensions, on peut prévoir deux barrières mobiles identiques qui se déplacent en sens inverse comme représenté sur la figure 5. Les mouvements des deux barrières peuvent être couplés mécaniquement ou électroniquement de façon à se rapprocher l'une de l'autre au cours de la phase de compression du film. Ce système est particulièrement avantageux dans le cas de films rigides où il est nécessaire d'approvisionner le film perpendiculairement à chaque face du substrat 8, spécialement si celui-ci est de grande surface.

La cuve 2 est recouverte par un châssis transparent 40 amovible pour permettre le nettoyage. De préférence, une circulation d'un gaz neutre tel que l'azote est assurée dans le châssis, comme on l'a schématisé par les canalisations d'arrivée 41a et d'évacuation 41b pour ce gaz. Cette circulation a pour but d'éliminer la vapeur d'eau qui se forme inévitablement et de l'empêcher de se condenser sur les parois du châssis 40. En effet, les gouttelettes d'eau, en retombant, perturberaient la formation du film. Le châssis 40 est adapté de manière aussi étanche que possible à la cuve 2. Il est nécessaire de prévoir une ouverture 42 pour l'introduction et l'évacuation du substrat dans le châssis 40. Cette ouverture est obturée par deux volets 44 à glissière qu'il est nécessaire de manipuler rapidement pendant l'introduction ou le relèvement du substrat afin de réduire dans toute la mesure du possible la quantité de gaz neutre qui s'échappe hors du châssis.

Une sonde de mesure permet de mesurer la tension superficielle du film. Cette sonde utilise le principe de la méthode de Wilhelmy décrite dans l'article « Instrumentation for Handling Monomolecular Films at an Air-Water Interface » de Peter Fromherz, Rev. Sci. Instruments, vol 46, n° 10, Octobre 1975. Selon cette méthode, une bande de papier filtre par exemple de 40 mm de large est suspendue à l'extrémité d'un ressort et sert de sonde hydrophilique. On transforme ainsi la tension superficielle du film en un déplacement du papier filtre représentatif de cette dernière. Ce déplacement est transformé en tension par un transducteur de déplacement inductif dont le noyau mobile est connecté à la sonde.

Selon l'invention, on augmente la sensibilité de la mesure en accrochant à l'étrier du transducteur deux bandes de papier filtre. On obtient ainsi deux gammes de mesure (0-50 ou 0-100 mN/m (milliNewton par mètre)) selon la sensibilité désirée. L'étrier de suspension est amovible. L'ensemble du dispositif de mesure de la tension superficielle est monté sur un bras qui peut être relevé soit automatiquement soit manuellement pour laisser passer la barrière mobile et permettre le nettoyage de la partie avant de la cuve.

On a représenté sur la figure 2 une vue en perspective d'une réalisation particulière conforme à l'invention de la barrière mobile 6. La barrière 6 comporte un décrochement 46 à chacune de ses extrémités. Une seule extrémité a été représentée sur la figure 2 mais l'autre extrémité est symétrique. Ainsi, la barrière comporte une partie dont la longueur est plus faible que la largeur de la cuve et qui pénètre à l'intérieur de celle-ci jusqu'à être immergée dans le liquide. On prévoit des moyens d'étanchéité entre la surface 50 de la barrière 6 et la face située en regard de la paroi longitudinale 2a. Dans la réalisation de la figure 2, ces moyens d'étanchéité sont constitués par un ruban fermé élastique 52 fixé à la face 50 et qui frotte sur la face de la paroi 2a lorsque la barrière se déplace, jouant le rôle d'un racleur. Cette réalisation assure une étanchéité complète.

Dans la variante de la figure 3, les angles des faces 2a sont chanfreinés et la barrière 6 est taillée en biseaux de manière à s'adapter aux faces 2a et assurer l'étanchéité par gravité au niveau des chanfreins 51.

Dans la variante de la figure 4, la barrière est réalisée en plusieurs tronçons, par exemple un tronçon principal 6' et un ou des tronçons latéraux 6''. Dans l'exemple représenté, la barrière comporte deux tronçons. On a représenté une seule extrémité. Les tronçons 6' et 6'' sont mobiles l'un par rapport à l'autre, par exemple au moyen de chevilles 54 fixées au tronçon 6' et engagées dans des trous correspondants du tronçon 6'' dans lequel elles coulissent avec un léger jeu. Des tubes élastiques réalisés par exemple en élastomère 56 sont fixés entre les tronçons 6' et 6'' sur l'une ou l'autre des pièces. Ces tubes assurent une pression suffisante des faces 50 contre les parois 2a pour assurer une étanchéité satisfaisante. A la place de tubes, on pourrait prévoir des blocs d'élastomères, en caoutchouc de silicone par exemple.

Les dispositifs décrits en référence aux figures 2 à 4 présentent l'avantage d'offrir une étanchéité absolue, même si la largeur de la cuve n'est pas rigoureusement la même partout, c'est-à-dire constante selon la longueur.

On a représenté sur la figure 6 une réalisation préférée des moyens pour lever ou abaisser le ou les substrats. Les pinces porte-substrat 12 sont fixées à une extrémité d'un bras 62. Le bras 62 est monté pivotant autour d'un axe horizontal 64. Un bras support 66 est monté pivotant autour du même axe 64. Il comporte deux bras 66a et une traverse 66b. Deux fils 68 qui s'enroulent sur des poulies 70 entraînées par un moteur électrique 72 permettent de relever ou d'abaisser le bras-support 66. Pendant le dépôt du film sur le substrat, les bras 62 reposent sur la traverse 66b. Le déplacement du bras-support 66 est programmé. Ce dispositif présente l'avantage de permettre de relever rapidement les substrats. En effet, bien que la vitesse du moteur 72 puisse être accélérée de manière à raccourcir le temps de remontée des substrats, le relevage prend tout de même un temps non négligeable. Or, comme on l'a décrit précédemment, le dépôt des couches monomoléculaires s'effectue sous une couverture d'un gaz neutre dont il faut limiter les fuites. Lors de l'introduction et de la remontée du substrat, il est nécessaire d'ouvrir les volets mobiles 44. Il est souhaitable que cette ouverture soit aussi brève que possible. C'est ce que permet la remontée manuelle du substrat autorisée par le dispositif de la figure 6.

Ce dispositif présente en outre l'avantage de conserver le positionnement précis des substrats, ce qui permet de le remettre exactement à la position qu'ils occupaient avant d'être remontés.

On peut également prépositionner le bras-support 66 tandis que les bras 62 sont soulevés.

On a représenté sur la figure 7 des moyens conformes à l'invention qui permettent le nettoyage de la surface de la cuve. Ce dispositif comporte un tube 74 et, une série de capillaires, c'est-à-dire des tubes fins, fixés au tube 74. Les capillaires 76 sont parallèles et débouchent à l'intérieur du tube. Ils sont disposés radialement au tube 74. Ce dernier est monté sur deux supports 78. Il est orientable en rotation de manière à permettre d'amener l'extrémité des capillaires à la surface du liquide 4. En outre, le tube 74 peut être déplacé en translation selon son axe longitudinal de manière à déplacer les capillaires à la surface de l'eau. Le tube 74 est relié à une source de dépression par un jeu de robinets (non représenté). Ce dispositif permet le nettoyage rapide et aisé de la surface de la cuve par aspiration des résidus de film qui flottent à la surface après une opération de dépôt. La barrière mobile 6 peut être avantageusement utilisée pour pousser les résidus de film vers les orifices des capillaires 76. Ce dispositif est indéréglable, efficace et particulièrement robuste. Un dispositif similaire à celui de la figure 7 est situé à chaque extrémité de la cuve 2. L'ensemble des deux dispositifs permet de nettoyer la totalité de la surface du liquide dans la cuve.

Le déplacement de la barrière mobile et le relevage du substrat sont commandés par une électronique insensible aux pannes de courant, où les numérateurs et les mémoires sont mécaniques. Grâce à des sécurités à manque de tension, en cas de coupure de courant, le système est stoppé en l'état et les informations sont conservées. La suite du programme est reprise au retour du courant. Ces dispositions permettent la marche automatique de nuit.

La cuve de l'invention comporte également une sécurité de réserve de film qui permet l'arrêt automatique du mouvement du substrat en position haute avant l'épuisement de la quantité de film disponible à la surface de l'eau. En effet, on sait que, de manière classique, le substrat est plongé dans l'eau et relevé afin d'être recouvert d'une multitude de couches. Etant donné qu'il est impossible de reprendre une couche interrompue, il est nécessaire que chaque couche déposée soit complète. On a prévu par conséquent un contact réglable disposé sur le trajet de la barrière mobile 6. Ce contact peut avantageusement être électronique. On le règle de telle façon que l'espace situé entre lui et le substrat détermine une surface suffisante pour que la quantité de film qui la recouvre permette d'assurer le dépôt d'une couche complète au cours d'une descente et d'une remontée du substrat. Lorsque la barrière atteint le contact, le système commande l'immobilisation du mouvement du substrat en position haute après la fin du mouvement de montée du substrat qui suit le moment où la barrière a atteint le contact mobile. Ce dispositif permet de tirer partie au mieux de la quantité de film répandue sur l'eau sans intervention humaine ; il permet en particulier le fonctionnement et l'arrêt de nuit.

Enfin, la cuve comporte un contrôle automatique permanent du niveau de l'eau. Le circuit d'admission d'eau est conçu pour ne pas introduire d'impuretés dans l'eau ultra-pure utilisée. Une électrovanne à écrasement de tuyau est utilisée pour stopper l'admission d'eau. La palette mobile d'un relais électromagnétique appuie au repos sur un tuyau souple et libère le tuyau à la mise sous tension. La prise du niveau de l'eau peut être faite de différentes manières. Elle peut être prise à l'arrière de la barrière mobile dans une zone sans film par un flotteur muni d'un contact. Le contact du flotteur peut alors être avantageusement constitué de deux bâtonnets croisés de graphite ou d'un bâtonnet de graphite croisé avec un fil métallique. Elle peut également prise au moyen d'un dispositif optique et peut alors se faire à l'avant ou à l'arrière de la barrière mobile. Elle peut également être prise par un dispositif électrique tel qu'un fil électrique affleurant l'eau.

Le contrôle permanent du niveau de l'eau évite les dérives au niveau de la mesure de tension superficielle et permet une utilisation prolongée de la cuve sans contrôle.

La compression du film s'effectue sans contrôle humain. En effet, l'asservissement de la barrière mobile comprend un limiteur de vitesse réglable qui agit sans modification ni du gain de la boucle ni de la pression superficielle choisie.

Un système de vidange évite la manipulation de grandes quantités de liquide. Ce système utilise une source de vide constituée avantageusement par une trompe à eau pour aspirer le liquide contenu dans la cuve. La séparation entre le bain de la cuve ultra-propre et l'eau de la trompe à eau, sale, s'effectue automatiquement par une boucle au-dessus du niveau de la cuve dans la tuyauterie. Cette boucle est munie d'une entrée d'air capillaire. Cette microfuite permet accessoirement de s'affranchir des fuites des robinets de la circuiterie.

## Revendications

1. Cuve de dépôt d'un film monomoléculaire comprenant une cuve (2) comportant des parois (2a, 2b) à rebord horizontal et un fond (2c), la cuve (2) contenant un liquide (4), une barrière (6) délimitant deux zones à la surface du liquide (4), des moyens (26) pour déplacer la barrière (6) à la surface du liquide (4) selon une direction perpendiculaire à la barrière (6), un solvant introduit sur la surface du liquide (4) et contenant des molécules dissoutes, au moins un substrat (8), des moyens (10 à 22) pour déplacer le substrat (8) selon une direction verticale, des moyens pour mesurer la tension à la surface du liquide, caractérisée en ce que le niveau du liquide est inférieur au rebord horizontal de la cuve, la barrière (6) présentant un décrochement (46) à chacune de ses extrémités et reposant sur les bords de la cuve par ce décrochement, ledit décrochement déterminant également une partie plus étroite partiellement immergée dans le liquide de la cuve, des moyens d'étanchéité étant prévus entre les faces (50) de la partie plus étroite et les parois (2a) situées en regard.

2. Cuve selon la revendication 1, caractérisée en ce que les moyens pour déplacer la barrière sont constitués par une première et une seconde poulies (28, 29) situées à une première extrémité de la cuve, par quatre poulies (30, 32, 34, 36) situées à une deuxième extrémité de la cuve, par un moteur (39) entraînant un cabestan (38) et par un câble (26) passant sur chacune desdites poulies et entraîné en rotation par le cabestan (38), les extrémités de la barrière (6) étant fixées au câble et se déplaçant dans le même sens.

3. Cuve selon la revendication 2, caractérisée en ce que la barrière (6) comporte un étrier (6a) fixé de manière amovible à la barrière (6), le câble (26) étant fixé aux extrémités de l'étrier (6a).

4. Cuve selon la revendication 1, caractérisée en ce que les moyens d'étanchéité sont constitués par un ruban râcleur (52) fixé à la face (50) de la barrière (6).

5. Cuve selon la revendication 1, caractérisée en ce que la barrière est constituée de plusieurs tronçons (6', 6") déplaçables l'un par rapport à l'autre en translation, des moyens élastiques (56) étant disposés entre les tronçons (6', 6").

6. Cuve selon l'une quelconque des revendications 1 à 5, caractérisée en ce que les moyens pour déplacer le substrat comportent un bras-support (66) pivotant autour d'un axe horizontal (64), ce bras-support (66) pouvant être relevé et abaissé au moyen d'un moteur (70), au moins un bras (62) pivotant à une première extrémité autour du même axe (64) que le bras-support (66) et reposant sur celui-ci, le substrat étant suspendu au bras (62), la cuve étant fermée par un châssis (40) renfermant une atmosphère de gaz neutre, ledit châssis comportant une ouverture (42) fermée par volet mobile (44) pour l'introduction et l'extraction du substrat (8).

7. Cuve selon l'une quelconque des revendications 1 à 6, caractérisée en ce qu'elle comporte des moyens pour nettoyer la surface du liquide, ces moyens étant constitués par un tube horizontal (74) maintenu sur deux pivots (78) et apte à être déplacé en rotation et en translation sur ces pivots, une pluralité de capillaires (76) parallèles étant fixés radialement au tube (74), des moyens d'aspiration étant raccordés au tube (74).

8. Cuve selon l'une quelconque des revendications 1 à 7, caractérisée en ce qu'elle comporte une sécurité de réserve de film constituée par un contact réglable qui détecte le passage de la barrière mobile (6) et commande les moyens pour arrêter le substrat (8) en position haute après l'achèvement du cycle entrepris.

9. Cuve selon l'une quelconque des revendications 1 à 8, caractérisée en ce qu'elle comporte des moyens de contrôle du niveau de l'eau (4) constitués par une électrovanne à écrasement de tuyau, et par une prise de niveau qui commande l'électrovanne.

## Claims

1. Tank for the deposition of a monomolecular film comprising a tank (2) having walls (2a, 2b) with a horizontal rim and a base (2c), the tank (2) containing a liquid (4), a barrier (6) defining two areas on the surface of the liquid (4), means (26) for displacing the barrier (6) on the surface of the liquid (4) in a direction perpendicular to the barrier (6), a solvent placed on the surface of the liquid (4) and containing dissolved molecules, at least one substrate (8), means (10-22) for displacing the substrate (8) in a vertical direction and means for measuring the tension on the surface of the liquid, characterized in that the level of the liquid is below the horizontal rim of the tank, the barrier (6) having a break (46) at each of its ends and resting on the edges of the tank by said break, the break also defining a narrower portion which is partly submerged in the liquid of the tank, sealing means being provided between the faces (50) of the narrower portion and the facing walls (2a).

2. Tank according to claim 1, characterized in that the means for displacing the barrier are constituted by first and second pulleys (28, 29) located at a first end of the tank, by four pulleys (30, 32, 34, 36) located at a second end of the tank, by a motor (39) driving a capstan (38) and by a cable (26) passing over each of the said pulleys and rotated by the capstan (38), the ends of the barrier (6) being fixed to the cable and moving in the same direction.

3. Tank according to claim 2, characterized in that the barrier (6) has a bracket (6a) detachably fixed to the said barrier (6), the cable (26) being fixed to the ends of the bracket (6a).

4. Tank according to claim 1, characterized in that the sealing means are constituted by a scraping tape (52) fixed to the face (50) of the barrier (6).

5. Tank according to claim 1, characterized in that the barrier is constituted by several sections (6', 6"), which are displaceable relative to one another in translation, elastic means (56) being positioned between the sections (6', 6").

6. Tank according to any one of the claims 1 to 5, characterized in that the means for displacing the substrate comprise a support arm (66) pivoting about a horizontal axis (64), said support arm (66) being raisable and lowerable by means of a motor (72), at least one arm (62) pivoting at a first end about the same axis (64) as the support arm (66) and resting thereon, the substrate being suspended on the arm (62), the tank being closed by a frame (40) containing a neutral gas atmosphere, said from having an opening (42) closed by a mobile flap (44) for the introduction and extraction of the substrate (8).

7. Tank according to any one of the claims 1 to 6, characterized in that it comprises means for cleaning the surface of the liquid, said means being constituted by a horizontal tube (74) maintained on two pivots (78) and being displaceable in rotation and translation on said pivots, a plurality of parallel capillaries (76) being radially fixed to the tube (74), to which are connected suction means.

8. Tank according to any one of the claims 1 to 7, characterized in that it has a film reserve safety means constituted by a regulatable contact, which detects the passage of the mobile barrier (6) and controls the means for stopping the substrate (8) in the raised position after completing the cycle.

9. Tank according to any one of the claims 1 to 8, characterized in that it comprises water level control means (4) constituted by a tube crushing electrovalve and by a level taking device which controls the electrovalve.

**Patentansprüche**

1. Depotwanne eines monomolekularen Films mit einer Wanne (2), die Seitenwände (2a, 2b) mit horizontalem Rand und einen Boden (2c) aufweist, wobei die Wanne (2) eine Flüssigkeit (4) enthält, einer Barriere (6), die zwei Zonen an der Oberfläche der Flüssigkeit (4) begrenzt, Einrichtungen (26) zum Verschieben der Barriere (6) an der Oberfläche der Flüssigkeit (4) entlang einer Richtung senkrecht zur Barriere (6), einem Lösungsmittel, das auf die Oberfläche der Flüssigkeit (4) eingeführt wird und gelöste Moleküle enthält, wenigstens einem Substrat (8), Einrichtungen (10 bis 22), um das Substrat (8) entlang einer vertikalen Richtung zu bewegen, Einrichtungen zum Messen der Spannung an der Oberfläche der Flüssigkeit, dadurch gekennzeichnet, daß das Niveau der Flüssigkeit unterhalb des horizontalen Randes der Wanne liegt, die Barriere (6) eine Abweichung bzw. einen Absatz (46) an jedem ihrer Enden aufweist und auf den Rändern der Wanne durch diesen Absatz aufliegt, wobei der Absatz ebenfalls einen engeren Bereich bestimmt, der teilweise in die Flüssigkeit der Wanne eingetaucht ist, wobei Dichtungseinrichtungen zwischen den Seiten (50) des engeren Bereichs und den Seitenwänden (2a), die gegenüberliegend angeordnet sind, vorgesehen sind.

2. Wanne nach Anspruch 1, dadurch gekennzeichnet, daß die Einrichtungen zum Bewegen der Barriere durch eine erste und eine zweite Scheibe (28, 29) gebildet sind, die an einem ersten Ende der Wanne angeordnet sind, durch vier scheiben (30, 32, 34, 36), die an einem zweiten Ende der Wanne angeordnet sind, durch einen Motor (39), der einen Kabstan (38) antreibt und durch ein seil (26) gebildet sind, das über eine jede der Scheiben läuft, und durch den Kabstan (38) angetrieben wird, wobei die Enden der Barriere (6) an dem Seil befestigt sind und sich in derselben Richtung bewegen.

3. Wanne nach Anspruch 2, dadurch gekennzeichnet, daß die Barriere (6) einen Bügel (6a) aufweist, der auf entfernbare Weise an der Barriere (6) befestigt ist, wobei das seil (26) an den Enden des Bügels (6a) befestigt ist.

4. Wanne nach Anspruch 1, dadurch gekennzeichnet, daß die Dichtungseinrichtungen durch ein Abstreiferband (52) gebildet sind, das an der Seite (50) der Barriere (6) befestigt ist.

5. Wanne nach Anspruch 1, dadurch gekennzeichnet, daß die Barriere aus mehreren Abschnitten (6', 6") gebildet ist, die translatorisch einander gegenüber verschiebbar sind, wobei elastische Einrichtungen (56) zwischen den Abschnitten (6', 6") angeordnet sind.

6. Wanne nach einem der Ansprüche 1 bis 5, dadurch gekennzeichnet, daß die Einrichtungen zum Bewegen des Substrats einen Tragarm (66) aufweisen, der um eine horizontale Achse (64) schwenkt, wobei dieser Tragarm (66) mittels eines Motors (72) angehoben und abgesenkt werden kann, wobei wenigstens ein Arm (62) an einem ersten Ende um dieselbe Achse (64) wie der Tragarm (66) schwenkt und auf diesem sich abstützt, wobei das Substrat am Arm (62) angehängt ist, die Wanne durch ein Chassis (40) geschlossen ist, das eine neutrale Gasatmosphäre einschließt, wobei das Chassis eine Öffnung (42) aufweist, die für die Einführung und Abführung des Substrats (8) durch einen bewegbaren Laden oder Deckel (44) geschlossen ist.

7. Wanne nach einem der Ansprüche 1 bis 6, dadurch gekennzeichnet, daß sie Einrichtungen zum Säubern der Flüssigkeitsoberfläche aufweist, wobei diese Einrichtungen durch ein horizontales Rohr (74) gebildet sind, das an zwei Gelenken (78) gehalten wird und geeignet ist in Drehung und längs auf den Lagern bewegt zu werden, wobei eine Mehrzahl von parallelen Röhrchen (76) radial an dem Rohr (74) befestigt sind, wobei Absaugeinrichtungen mit dem Rohr (74) verbunden sind.

8. Wanne nach einem der Ansprüche 1 bis 7, dadurch gekennzeichnet, daß sie eine Filmreservesicherheitseinrichtung aufweist, die von einem einstellbaren Kontakt gebildet ist, der die Vorbeibewegung der beweglichen Barriere (6) erfaßt und die Einrichtungen betätigt, um das Substrat (8) in angehobener Stellung anzuhalten nach Beendigung des vorgenommenen Zyklusses.

9. Wanne nach einem der Ansprüche 1 bis 8, dadurch gekennzeichnet, daß sie Steuereinrichtungen des Wasserniveaus (4) aufweist, die hdurch ein Elektroventil beim Zusammendrücken des Rohres, und durch eine Erfassung des Niveaus gebildet sind, das das Elektroventil betätigt.

FIG.1

EP 0 145 585 B1

FIG.2

FIG.3

FIG.4

FIG.6

70

72

70

68

68

66 b

66

64

66a

62

12

10

8

2

4

FIG.5

12

4

6

8

6

2b

2c

FIG.7

2

78

76

74

78

3